# EUROPÄISCHE PATENTSCHRIFT

(11) **EP 3 263 533 B1**
(45) Veröffentlichungstag und Bekanntmachung des Hinweises auf die Patenterteilung: **08.05.2019**
(21) Anmeldenummer: 16176590.4
(22) Anmeldetag: 28.06.2016
(51) Int. Cl.: C03B 20/00, C03B 19/06, C03B 32/00, H01S 3/067

(54) **SELTENERDMETALL-DOTIERTES QUARZGLAS SOWIE VERFAHREN FÜR DESSEN HERSTELLUNG**
RARE EARTH METAL DOPED QUARTZ GLASS AND METHOD FOR PRODUCING THE SAME
VERRE DE SILICE DOPÉ AVEC UNE TERRE RARE ET PROCÉDÉ POUR SA FABRICATION

(43) Veröffentlichungstag der Anmeldung: 03.01.2018
(73) Patentinhaber: Heraeus Quarzglas GmbH & Co. KG, 63450 Hanau (DE); Leibniz-Institut für Photonische Technologien e.V., 07745 Jena (DE)
(72) Erfinder: BAIERL, Hardy, 06571 Donndorf (DE); GRIMM, Stephan, 07743 Jena (DE); SCHUSTER, Kay, 07743 Jena (DE); Dellith, Jan, 07749 Jena (DE); LANGNER, Andreas, 63579 Freigericht (DE); SCHOETZ, Gerhard, 63741 Aschaffenburg (DE); LEHMANN, Walter, 04155 Leipzig (DE); KAYSER, Thomas, 04105 Leipzig (DE)
(74) Vertreter: Staudt, Armin Walter

(56) Entgegenhaltungen:
- EP-A1- 1 894 896
- WO-A1-2005/054139
- JP-A- 2007 230 814
- US-A1- 2005 272 588

## Beschreibung

### Technischer Hintergrund

Die Erfindung betrifft ein Verfahren zur Herstellung von Seltenerdmetall-dotiertem Quarzglas, umfassend die Verfahrensschritte:
(a) Bereitstellen eines Rohlings aus dem mit Seltenerdmetall dotierten Quarzglas, und
(b) Homogenisieren des Rohlings, indem dieser in einer Heizzone zonenweise erweicht und dabei die erweichte Zone längs einer Rotationsachse tordiert wird.

Außerdem betrifft die Erfindung Seltenerdmetall-dotiertes Quarzglas, das Seltenerdmetalloxid in einer Konzentration von 0,002 bis 10 mol-% enthält.

Seltenerdmetalldotiertes Quarzglas wird beispielsweise für die Herstellung von Armaturen und Bauteilen für die Halbleiterfertigung oder von Faserverstärkern oder Faserlasern in der Lasertechnologie verwendet. Im erstgenannten Einsatzgebiet bewirken die Dotierstoffe einer Verbesserung der Trockenätzbeständigkeit des Glaswerkstoffs, und im zweitgenannten Einsatzgebiet die Generierung der Verstärkung von Laserstrahlung im Wirtsmaterial Quarzglas.

Zu den Seltenerdmetallen gehören die Elemente Scandium, Yttrium und Lanthan und die Lanthanoide.

### Stand der Technik

Die Herstellung eines mit der Seltenerd- oder Übergangsmetallen dotierten, laseraktiven Quarzglases ist in der DE 10 2004 006 017 A1 beschrieben. Dabei wird von einem wässrigen Schlicker ausgegangen, der mittels Fällungsreaktion erzeugte, nanoskalige SiO₂-Partikel sowie Ausgangsverbindungen für die Dotierstoffe in Form wasserlöslicher Hydratverbindungen enthält. Nach der Granulierung wird das noch poröse dotierte SiO₂-Granulat in eine Grafitform gegeben und durch Gasdrucksintern zu einem Rohling aus dotiertem Quarzglas verglast. Die Grafitform wird zunächst unter Aufrechterhaltung eines Unterdrucks auf eine Sintertemperatur von 1600 °C aufgeheizt. Nach Erreichen der Sintertemperatur wird im Ofen ein Überdruck von 5 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrechterhalten. Der so erhaltene SiO₂-Rohling wird anschließend dreidimensional homogenisiert. Die Homogenisierung erfolgt durch Durchmischen des SiO₂-Rohlings in mehreren Richtungen. Dadurch wird Schlierenfreiheit und eine in drei Dimensionen homogene Verteilung der Brechzahl erreicht.

Die JP 2007-230814 A beschreibt die Herstellung von Seltenerdmetall-dotiertem Quarzglas, wobei eine Pulvermischung unter Vakuum oder durch Heißpressen zu einem Quarzglasrohling gesintert, und der Quarzglasrohling durch Verdrillen anschließend homogenisiert wird. Es wird ein Seltenerdmetall-dotiertes Quarzglas mit einer Seltenerdmetall-Konzentration zwischen 0,2 und 5 Gew.-%, einem niedrigem Blasengehalt von weniger als 0,1 mm² pro 100 cm³ Glas, vorzugsweise weniger als 0,01 mm² pro 100 cm³ Glas, und einem geringem OH-Gehalt erhalten. Für die Fluktuation im Brechungsindex in Richtung der Längsachse einer Messprobe wird der Bereich von weniger als 5x10⁻⁶ genannt.

In der WO 2005/054139 A1 ist ein Verfahren zur Herstellung eines Rohlings für ein Bauteil aus laseraktivem Quarzglas über die "Granulatroute" beschrieben. Auf Grundlage von SiCl₄ werden SiO₂-Partikeln synthetische hergestellt, und aus diesen wird ein poröses SiO₂-Granulat erzeugt. Dieses wird einer Dehydratationsbehandlung in chlorhaltiger Atmosphäre bei einer Temperatur von mindestens 1100 °C unterzogen und dabei vorverdichtet, es bleibt aber porös. Das poröse Granulat wird anschließend durch Gasdrucksintern zu einem Seltenerd-dotierten Quarzglasblock verglast. Alternativ dazu erfolgt die Dehydratationsbehandlung unter Chlor-haltiger Atmosphäre im Drehrohrofen bei einer Temperatur von 1250 °C. Das vorverdichtete, noch poröse Granulat wird vor dem Gasdrucksintern auf 1450 °C erhitzt und dabei dichtgesintert. Der so erhaltene Rohling aus Seltenerdmetall-dotiertem, laseraktivem Quarzglas hat einen OH-Gehalt von weniger als 1 Gew.-ppm. Er kann dreidimensional homogenisiert werden. Die Homogenisierung erfolgt durch Durchmischen des SiO₂-Rohlings in mehreren Richtungen. Dadurch wird Schlierenfreiheit und eine in drei Dimensionen homogene Verteilung der Brechzahl erreicht.

Aus der EP 1 894 896 A1 ist es bekannt, ein laseraktives, mit Seltenerdmetall dotiertes Quarzglas unter Einsatz eines Mischpulvers enthaltend Quarzpulver und zwei oder mehr Arten von Dotierelementen in einer Menge von insgesamt 1 bis 20 Gew.-% herzustellen, wobei die Dotierelemente einen ersten Dotierstoff ausgewählt aus der Gruppe aus N, C und F sowie einen zweiten Dotierstoffart, ausgewählt aus der Gruppe bestehend aus Mg, Ca, Sr, Ba, Sc, Y, Ti, Zr, Hf, Lanthanoide und Actinoide umfassen. Das Mischpulver wird anhand der Verneuil-Methode unter reduzierend wirkender Atmosphäre zu einem Quarzglas-Rohling erschmolzen. Visuell sind in einem Volumen von 100 cm³ Glas Blasen mit einer Gesamtquerschnittsfläche um 5 mm² erkennbar, und die interne Transmission für sichtbares Licht beträgt 80%/cm.

In der US 2005/0272588 A1 geht es um ein Quarzglas für Waferhalter. Um die Plasmaätzbeständigkeit gegenüber fluorhaltigem Ätzgas zu erhöhen, wird vorgeschlagen, das Quarzglas mit Metalloxiden in einer Konzentration zwischen 0,1 bis 20 Gew.-% zu dotieren, wobei als ein erster Dotierstoff aus der Gruppe 3B des Periodensystems und ein zweiter Dotierstoff aus der Gruppe Mg, Ca, Sr, Ba, Sc, Y, Ti, Zr, Hf, Lanthanide oder Actinoide ausgewählt ist. Durch Heißpressen unter Argon-Atmosphäre kann der Blasengehalt reduziert werden, so dass sich eine Gesamtquerschnittsfläche von weniger als 100 mm² pro 100 cm³ Glas ergibt.

### Technische Aufgabenstellung

Die Heißhomogenisierung erfolgt üblicherweise durch Verdrillen des dotierten Quarzglases auf einer Glasdrehbank, wobei die Spindelstöcke, in die der Quarzglaskörper eingespannt ist, mit unterschiedlichen Geschwindigkeiten rotiert werden. In der Vergangenheit wurde die Homogenisierung so durchgeführt, dass das dotierte Quarzglas mittels Wasserstoff-Sauerstoff-Brenner unter Sauerstoff-Überschuss homogenisiert beziehungsweise verdrillt wurde, wobei das dotierte Quarzglas gut durchmischt wird.

Bei einigen Seltenerdmetallen wird jedoch eine Verfärbung des Quarzglases beobachtet, was auf eine nicht vorhersehbare und unerwünschte Veränderung der chemischen Zusammensetzung oder möglicherweise auf eine inhomogene Verteilung der Dotierstoffe hinweist.

Der Erfindung liegt daher die Aufgabe zugrunde, ein modifiziertes Verfahren anzugeben, das die Herstellung von Seltenerdmetall-dotiertem Quarzglas mit reproduzierbaren Eigenschaften gewährleistet.

Außerdem liegt der Erfindung die Aufgabe zugrunde, ein Seltenerdmetall-dotiertes Quarzglas bereitzustellen, das eine geringe Fluktuation im Brechungsindex aufweist und das sich außerdem durch eine hohe Homogenität seiner chemischen und elektrischen Eigenschaften auszeichnet.

### Allgemeine Darstellung der Erfindung

Hinsichtlich des Verfahrens wird diese Aufgabe ausgehend von einem Verfahren der eingangs genannten Gattung erfindungsgemäß dadurch gelöst, dass der Rohling beim Homogenisieren gemäß Verfahrensschritt (b) unter Einwirkung eines oxidierend wirkenden oder eines neutralen Plasmas erweicht wird.

Das erfindungsgemäße Verfahren dient zur Herstellung von Seltenerdmetall-dotiertem Quarzglas unter Einsatz von natürlich vorkommendem bevorzugt aber synthetisch erzeugtem SiO₂-Rohstoff in Partikelform, der mit dem Dotierstoff dotiert ist oder mit feinteiligem Pulver des Dotierstoffs vermischt ist. Die Dotierstoff-Konzentration liegt typischerweise im Bereich von 0,01 bis 10 mol-%.

Der mit Seltenerdmetall dotierte SiO₂-Rohstoff wird zu einem porösen Zwischenprodukt verarbeitet und liegt dabei als mechanisch oder thermisch vorverdichteter Pressling oder Grünkörper vor; er kann aber auch eine lose Schüttung aus Partikeln oder aus einem Granulat des SiO₂-Rohstoffs bilden.

Das Sintern des porösen vorverdichteten oder teilchenförmigen Zwischenprodukts erfolgt beispielsweise durch Sintern in einem Hüllrohr oder beispielsweise durch Gasdrucksintern in einer Sinterform. Die Gasdruck-Sinterform enthält in der Regel Teile aus Grafit oder sie besteht aus Grafit, was beim Gasdrucksintern zu einer gegenüber Seltenerdmetallen und Silizium reduzierend wirkenden Schmelzatmosphäre führt. Ergebnis des Sinterprozesses ist ein Rohling aus mehr oder weniger transparentem, dotiertem Quarzglas. Die "reduzierende Wirkung" der Sinteratmosphäre zeigt sich darin, dass sie zu einem Rohling führt, dessen Sauerstoffgehalt geringer ist als bei einem durch Stöchiometrie definierten Oxidationszustand. Dieser Sauerstoffgehalt wird im Folgenden als "unterstöchiometrischer Sauerstoffgehalt", und der entsprechende Oxidationszustand des dotierten Quarzglases als "reduzierter Oxidationsgrad" bezeichnet.

Infolge reduzierend wirkender Sinterbedingungen kommt es zu chemischen Reaktionen und zur bereichsweisen Anreicherung von Komponenten mit einem reduzierten Oxidationsgrad und zu Brechungsindex-Fluktuationen, die zu einer erhöhten Streuung im Quarzglas führen und dadurch die Transmission reduzieren.

Die reduzierend wirkende Atmosphäre kann insbesondere die chemische Wertigkeit (Valenz) der Seltenerdionen beeinflussen. So kann beispielsweise bei einer Dotierung mit Yb die chemische Wertigkeit der Ytterbium-Ionen zu einem signifikanten Anteil von Yb³⁺ zu Yb²⁺ reduziert sein. Durch den Yb²⁺-Anteil erscheint das Glas gelblich verfärbt.

Der Rohling aus dem seltenerddotierten Quarzglas wird anschließend einer thermisch mechanischen Behandlung unter Einwirkung eines oxidierend wirkenden Plasmas unterzogen. Diese Behandlung wird im Folgenden auch als "Plasma-Homogenisierung" bezeichnet. Hierzu wird der Rohling in eine Rotationseinrichtung - wie etwa in eine Glasdrehbank - eingespannt, die mit mindestens einer Plasma-Heizeinrichtung zur Erzeugung eines heißen Plasmas ausgestattet ist. Der Plasma-Heizeinrichtung wird ein Plasmagas zugeführt, das geeignet ist, ein gegenüber Seltenerdmetallen und Silizium oxidierend wirkendes Plasma zu erzeugen. Durch unterschiedliche Rotationsgeschwindigkeiten der beidseitigen Rohling-Halterungen zueinander entsteht im Einwirkungsbereich des Plasmas ein Tordierungsbereich, in dem eine Durchmischung des Glases stattfindet.

Die "oxidierende Wirkung" des Plasmas führt dazu, dass der Oxidationsgrad des dotierten Quarzglases nach dem Homogenisierungsprozess insgesamt höher ist als davor. Die oxidierende Wirkung wird durch eine gegenüber Seltenerdmetallen und Silizium oxidierend wirkende Komponente oder mehrere oxidierend wirkende Komponenten im Plasmagas erzeugt. Zu den oxidierend wirkenden Komponenten gehören Sauerstoff, Chlor und Fluor. Im einfachsten und bevorzugten Fall wird dem Plasma ein sauerstoffhaltiges Gas oder ein Gasgemisch zugeführt, wie beispielsweise Sauerstoff oder Luft.

Das "neutrale Plasma" wirkt auf den Rohling weder oxidierend noch reduzierend. Es führt dazu, dass der Oxidationsgrad des dotierten Quarzglases nach dem Homogenisierungsprozess der gleiche ist wie davor. Zu den neutralen Plasmagasen, die weder eine oxidierende noch eine reduzierende Wirkung gegenüber Seltenerdmetallen und Silizium entfalten, können Stickstoff und Argon und Helium gehören. Durch das erfindungsgemäße Homogenisieren unter Einwirkung eines oxidierend wirkenden oder neutralen Plasmas werden folgende Wirkungen gleichzeitig erreicht:
1. Die nach dem Gasdrucksintern im Rohling vorliegenden Brechungsindexfluktuationen werden durch die mechanische Durchmischung des Glases reduziert. Durch Brechungsindex-Unterschiede bedingte Streuzentren im dotierten Quarzglas werden minimiert und die optische Transmission wird erhöht.
2. Bei Seltenerdmetallen können in der Regel mindestens zwei Oxidationsstufen auftreten. Derartige "polyvalente Ionen" zeigen häufig starke Absorptionsbanden im sichtbaren und im UV-Wellenlängenbereich.
   Nicht in der höchsten Oxidationsstufe vorliegende Seltenerdmetalle werden im Folgenden unter dem Begriff "reduzierte Spezies" zusammengefasst.
   Das Plasma besteht teilweise oder vollständig aus freien positiv und negativ geladenen Teilchen (Ionen, Elektronen, Radikalen), die sehr reaktiv sind. Durch das Verdrillen wird laufend frische Oberfläche erzeugt, so dass das Glasvolumen nach und nach der oxidierenden Wirkung des Plasmas ausgesetzt ist. Infolgedessen werden reduzierte Spezies mindestens teilweise aufoxidiert. Die Art des Plasmagases beeinflusst daher den Oxidationsgrad und die elektronischen Eigenschaften des Quarzglases nach dem Homogenisieren. Eine etwaige ungünstige elektronische Eigenschaft der reduzierten Spezies wird verringert oder beseitigt. So tragen beispielsweise Ytterbium-Ionen in der zweiwertigen Form (Yb²⁺) zum Laserprozess nicht bei, so dass sie in diesem Zustand eine Absenkung der angeregten Lebensdauer der Ytterbium-Ionen, beziehungsweise eine Reduktion der Lasereffizienz des Laserglases herbeiführen. Durch Aufoxidation in den dreiwertigen Zustand (Yb³⁺) wird dieser Nachteil beseitigt.
   Die reduzierte Spezies kann sich auf den Brechungsindex des Glases auswirken. Gegebenenfalls wird durch die oxidierende Behandlung auch dieser Anteil der Brechungsindex-Unterschiedes und die damit einhergehende Streuwirkung beseitigt oder vermindert.
3. Bei der Herstellung von synthetischem Quarzglas werden typischerweise chlorhaltige Ausgangssubstanzen, wie beispielsweise Chlorsilane oder Chloralkylsilane eingesetzt. Auch bei der durch Fällung erzeugten Kieselsäure werden wegen ihrer Löslichkeit häufig chlorhaltige Ausgangssubstanzen verwendet. Außerdem werden SiO₂-Ausgangsmaterialien und partikelförmiges oder poröses Halbzeug für die Herstellung des Quarzglas-Rohlings in der Regel unter Einsatz von Chlor oder HCl behandelt, um Verunreinigungen und Hydroxylgruppen zu beseitigen. Daher enthält synthetisch erzeugtes Quarzglas häufig eine gewisse Menge an Chlor. Diese Chlor-Verunreinigung kann im Rohling und bei nachfolgenden Heißprozessen zu Blasenbildung führen und wirkt sich bei einigen Anwendungen des Seltenerd-dotierten Quarzglases ungünstig aus. Es hat sich gezeigt, dass ein Teil der Chlor-Verunreinigung durch die thermisch-mechanische Durchmischung in oxidierend wirkendem Plasma beseitigt wird, auch wenn das Chlor in der Glasstruktur chemisch gebunden ist. Insbesondere werden Chlor-Konzentrationsspitzen beseitigt und eine Vergleichmäßigung der Chlorkonzentration über das Bauteil-Volumen erreicht.

Als Plasma-Heizeinrichtung kommen beispielsweise Lichtbogenbrenner in Betracht. Besonders bewährt hat sich es sich jedoch, wenn ein Mikrowellen-Atmosphärendruckplasma oder ein induktiv gekoppeltes Plasma erzeugt wird.

Das Atmosphärendruckplasma wird bei Atmosphärendruck gezündet und benötigt daher im Gegensatz zu einem Niederdruck- oder Hochdruckplasma kein Druckgefäß zur Aufrechterhaltung eines vorgegebenen Druckniveaus. Der Generator für das mikrowelleninduzierte Plasma ist kompakt und kostengünstig. Demgegenüber sind mittels induktiv gekoppelten Plasmas höhere Heizleistungen erreichbar.

Vorzugsweise wird dem Plasma ein Plasmagas zugeführt, das frei von Wasserstoff und wasserstoffhaltigen Verbindungen ist.

Wasserstoff wirkt gegenüber Seltenerdmetallen reduzierend und verhindert die neutrale Wirkung oder setzt daher die gewünschte oxidierende Wirkung des Plasmas herab. Im Idealfall enthält das dem Plasma zugeführte Plasmagas daher nominal keinerlei Quelle für Wasserstoff.

Im Hinblick auf eine besonders hohe Homogenität der Brechzahlverteilung und Beseitigung reduzierter Spezies wird eine Verfahrensvariante bevorzugt, bei der das Homogenisieren des Rohlings zwei Homogenisierungsschritte umfasst, in denen der Rohling in zwei senkrecht aufeinander stehenden Richtungen tordiert wird.

Durch zwei aufeinanderfolgende Durchmischungen des Rohlings in zwei senkrecht aufeinander stehenden Richtungen wird eine Homogenisierung in allen Raumrichtungen erreicht. Durch dieses "dreidimensionale Homogenisieren" wird Schlierenfreiheit und eine homogenere Verteilung der Brechzahl in allen Richtungen erreicht.

Das dreidimensionale Homogenisieren eines Quarzglaskörpers ist in der EP 0 673 888 B1 beschrieben. Es ist bei besonders hohen Vorgaben an Homogenität, Blasenfreiheit und Oxidationsgrad hilfreich, erfordert jedoch einen hohen Zeit- und Energieaufwand.

Hinsichtlich des Seltenerdmetall-dotierten Quarzglases wird die oben genannte Aufgabe ausgehend von einem Glas der eingangs genannten Gattung erfindungsgemäß dadurch gelöst, dass es eine Fluktuation im Brechungsindex δΔn aufweist, die - bei einer zylinderförmigen Messprobe mit Radius r über eine Messlänge von 1/3 x r bis 1/2 x r und gemessen von r=0 nach außen - bezogen auf eine mittlere Brechungsindexdifferenz Δn bezüglich undotiertem Quarzglas - im Bereich von weniger als 10 % beträgt, und dass es eine durch einen TBCS-Wert (total bubble cross section) von weniger als 10 repräsentierte Blasigkeit aufweist, und dass das Quarzglas einen mittleren Chlorgehalt im Bereich von 300 bis 3000 Gew.-ppm aufweist.

Das erfindungsgemäße Seltenerdmetall-dotierte Quarzglas zeichnet sich durch eine homogene Verteilung des Brechungsindex und gleichzeitig durch geringe Blasigkeit aus. Die homogene Verteilung des Brechungsindex zeigt sich in einem niedrigen Wert für die Maßzahl δΔn /Δn, bei der der maximale BrechungsindexUnterschied δΔn über eine Messlänge auf die mittlere Brechungsindexdifferenz bezüglich undotiertem Quarzglas Δn normiert ist. Diese Maßzahl beträgt weniger als 10 %.

Als Maß für die Blasigkeit des Seltenerdmetall-dotierten Quarzglases wird der sogenannte TBCS-Wert herangezogen. Der TBCS-Wert bezeichnet die Summe der

Querschnittsflächen (in mm²) aller Blasen bezogen auf ein Einheitsvolumen von 100 cm³. Bei einem TBCS-Wert von weniger als 0,5 ist ein Glas im Wesentlichen "blasenfrei".

Das Seltenerdmetall-dotierte Quarzglas hat vorzugsweise einen mittleren Hydroxylgruppengehalt zwischen 0,1 und 100 Gew.-ppm.

Das Bauteil aus dem mit Seltenerdmetall dotiertem Quarzglas ist beispielsweise laseraktiv oder laserpassiv und zum Einsatz in der Lasertechnik, oder es ist zum Einsatz bei der Halbleiterfertigung in ätzend wirkender Umgebung vorgesehen. Für viele dieser Anwendungen ist ein sehr geringer Hydroxylgruppengehalt erwünscht; vorzugsweise liegt er im erfindungsgemäßen Seltenerdmetall-dotierten Quarzglas bei weniger als 3 Gew.-ppm.

Chlor verringert den Brechungsindex von Quarzglas. Beim Einsatz des Seltenerdmetall-dotierten Quarzglases für den Kern einer optischen Faser bewirkt der verringerte Brechungsindex eine kleinere numerische Apertur (NA) der Faser, was für viele Laseranwendungen erwünscht ist, da sich dadurch die Einkoppel- und Abstrahlcharakteristik der Faser und die Strahlqualität verbessern. Insbesondere lässt sich der Laserstrahl besser fokussieren, was einen größeren Arbeitsabstand zwischen Laser und zu bestrahlendem Gut ermöglicht. Daraus ergibt sich die Untergrenze von 300 Gew.-ppm für den mittleren Chlorgehalt. Andererseits kann Chlor zur Blasenbildung bei nachfolgenden Heißprozessschritten führen. Es ist auch bekannt, dass Chlor in Quarzglas zur Defektbildung der Glasstruktur beitragen kann, die sich insbesondere beim Einsatz mit hochenergetischer UV-Strahlung in einer mit der Zeit zunehmenden Absorption zeigt und die auch als "Solarisation bezeichnet wird. Daraus ergibt sich die Obergrenze von 3000 Gew.-ppm für den mittleren Chlorgehalt.

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Quarzglas

Unter Quarzglas wird hier hochkieselsäurehaltiges Glas mit einem SiO₂-Anteil von mindestens 90 mol-% verstanden.

### Granulate

Man kann zwischen Aufbaugranulation und Pressgranulation und verfahrenstechnisch zwischen Nass-, Trocken- und Frost-Granulierverfahren unterscheiden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primärteilchen diskrete, größere Agglomerate, die hier als "SiO₂-Granulatteilchen" oder kurz "Granulatteilchen" bezeichnet werden. In ihrer Gesamtheit bilden die Granulatteilchen ein "SiO2-Granulat".

### Reinigung

Das Granulat beziehungsweise ein aus dem Granulat erzeugter Pressling werden in der Regel vor dem Sintern gereinigt. Die Hauptverunreinigungen sind Restwasser (OH-Gruppen), kohlenstoffhaltige Verbindungen, Übergangsmetalle, Alkalimetalle und Erdalkalimetalle, die aus dem Einsatzmaterial stammen oder durch die Prozessierung eingetragen werden. Bereits durch Einsatz reiner Einsatzmaterialien und durch entsprechendes Equipment und Prozessierung unter Reinraumbedingungen kann ein geringer Verunreinigungsgehalt erreicht werden. Um noch höhere Anforderungen an die Reinheit zu erfüllen, kann das Granulat beziehungsweise der Pressling bei hoher Temperatur (bis zu 1200 °C) unter chlorhaltiger und sauerstoffhaltiger Atmosphäre behandelt werden. Dabei dampft restliches Wasser ab, organische Materialien reagieren zu CO und CO₂ und viele Metalle

(wie beispielsweise Eisen und Kupfer) können zu flüchtigen, chlorhaltigen Verbindungen konvertiert werden.

### Sintern / Verdichten und Verglasen / Schmelzen

Mit "Sintern" oder "Verdichten" wird hier ein Verfahrensschritt bezeichnet, bei dem ein SiO₂-Granulat bei erhöhter Temperatur von mehr als 1100 °C entweder in einem dynamischem Ofen (beispielsweise in einem Drehrohrofen) oder in einem statischen Ofen behandelt wird. Dabei verringert sich die spezifische Oberfläche (BET), wohingegen die Schüttdichte und die mittlere Partikelgröße aufgrund von Agglomerationen von Granulatteilchen zunehmen können.

Während des "Verglasens" oder "Schmelzens" wird das vorverdichtete, gesinterte SiO₂-Granulat unter Bildung eines Quarzglaskörpers verglast.

### Vakuum / Unterdruck

Der Gasdrucksinterprozess kann eine Unterdruckphase beinhalten, bei dem das Zwischenprodukt unter "Vakuum" erhitzt wird. Der Unterdruck wird als absoluter Gasdruck angegeben. Unter Vakuum wird ein absoluter Gasdruck von weniger als 2 mbar verstanden.

### Messung der Konzentration an Hydroxylgruppen (OH-Gruppen)

Die Messung erfolgt anhand der Methode von D.M. Dodd and D.B. Fraser, "Optical determination of OH in fused silica", Journal of Applied Physics, Vol. 37(1966), p. 3911.

### Messung von radialen Konzentrationsprofilen von Komponenten und Ermittlung des Mittelwerts der Chlor-Konzentration

Die Messung von Konzentrationsprofilen für Komponenten des Seltenerdmetall-dotierten Quarzglases, insbesondere der darin enthaltenen Seltenerdmetalle und von Chlor erfolgt mittels wellenlängendispersiver Röntgenfluoreszenzanalyse (RDX) in Verbindung mit einer Elektronenstrahlmikroanalyse (ESMA) an Messproben über eine Länge von 2 mm mit einem Messintervall von 0,01mm. Dabei liegt der Messwert bei der Messlänge = 1 mm möglichst genau im Mittelpunkt der Messprobe. Der Mittelwert der Chlorkonzentration ergibt sich als arithmetisches Mittel aller Messwerte.

### Messung der Fluktuation des Brechungsindex (δΔn)

Die Messung des Brechzahl-Profils erfolgt mittels eines handelsüblichen Profilanalysators "P104" der Firma York. Aus dem Brechzahl-Profil wird der mittlere Brechungsindex Δn als Brechungsindexdifferenz gegenüber undotiertem Quarzglas ermittelt. Um Randeffekte bei der Ermittlung des maximalen Brechungsindex-Fluktuation δΔn und der Maßzahl für die Brechungsindex-Fluktuation δΔn/Δn zu minimieren, erfolgt die Auswertung des Brechzahlprofils über eine Messlänge von 1/3 x r bis 1/2 x r, mit r=Radius der zylinderförmigen Messprobe (gemessen vom Nullpunkt in der Probenmitte nach außen). Die Maßzahl für die Brechungsindex-Fluktuation δΔn/Δn ergibt sich dann als maximaler Brechungsindexunterschied δΔn über der Messlänge, bezogen auf die mittlere Brechungsindexdifferenz Δn bezüglich undotiertem Quarzglas. Die Normierung auf Δn berücksichtigt den Umstand, dass der maximale Brechungsindex-Fluktuation δΔn in der Regel mit dem mittleren Brechungsindex Δn zunimmt..

### Messung der Blasigkeit

Der TBCS-Wert (engl.: Total Bubble Cross Section) bezeichnet die Gesamtquerschnittsfläche (in mm²) aller Blasen innerhalb einer Probe bezogen auf ein Einheitsvolumen von 100 cm³. Der Wert wird durch visuelles Erfassen der Blasen und Addieren der Blasenquerschnitte ermittelt, wobei Blasen mit Durchmessern von weniger als 0,08 mm nicht erfasst werden.

### Ausführungsbeispiel

Nachfolgend wird die Erfindung anhand eines Ausführungsbeispiels und einer Zeichnung näher beschrieben. Im Einzelnen zeigt
- **Figur 1**: den thermisch mechanischen Behandlungsprozess zur Plasmahomogenisierung anhand einer schematischen Darstellung,
- **Figur 2**: ein Diagramm mit einem Brechungsindexprofil einer Yb-Al-Fdotierten Quarzglasprobe vor und nach der Homogenisierung
- **Figur 3**: ein Foto einer scheibenförmigen Probe, an der die beiden Dämpfungsspektren von Figur 4 gemessen worden sind,
- **Figur 4**: ein Diagramm mit Dämpfungsspektren der in Figur 2 gezeigten teilhomogenisierten Probe,
- **Figur 5**: ein Diagramm zum Vergleich der WDX-Verteilungsprofile für Aluminiumoxid vor und nach der Plasmahomogenisierung,
- **Figur 6**: ein Diagramm zum Vergleich der WDX-Verteilungsprofile für Ytterbiumoxid vor und nach der Plasmahomogenisierung,
- **Figur 7**: ein Diagramm zum Vergleich der WDX-Verteilungsprofile für Siliciumoxid vor und nach der Plasmahomogenisierung, und
- **Figur 8**: ein Diagramm zum Vergleich der WDX-Verteilungsprofile für Chlor vor und nach der Plasmahomogenisierung.

### Herstellung eines stabförmigen Halbzeugs aus dotiertem Quarzglas

Es wird ein Schlicker aus diskreten, synthetisch erzeugten SiO₂-Partikeln mit einer mittleren Teilchengröße um 10 µm in Reinstwasser hergestellt. Eine Menge von 285,7g des Schlickers mit einer Restfeuchte von 37,4% wird mit 1000 ml Reinstwasser verdünnt. Durch Zugabe einer konzentrierten Ammoniaklösung in einer Menge von 75 ml wird ein pH-Wert von 14 eingestellt. Die alkalische Suspension wird homogenisiert Zur Herstellung eines mit Yb₂O₃ und Al₂O₃ dotierten Quarzglases wird parallel eine wässrige Dotierstofflösung aus AlCl₃ und YbCl₃ (Molverhältnis 4:1) in 400 ml Reinstwasser erzeugt. Anstelle der Chloride können auch andere Ausgangssubstanzen eingesetzt werden, wie beispielsweise organische Verbindungen, Nitride oder Fluoride.

Der durch Rühren bewegten Suspension wird die Dotierstofflösung in Form eines Sprühnebels während einer Dauer von 65 Minuten zugeführt. Zur Erzeugung des Sprühnebels wird die Dotierstofflösung mittels einer Sprühdüse zerstäubt, wobei ein Arbeitsdruck von 2 bar und eine Durchflussrate von 0,8 l/h eingestellt wird. Der so erzeugte Sprühnebel enthält Tropfen mit einem mittleren Durchmesser zwischen 10 µm und 40 µm. Aufgrund des hohen pH-Wertes der Suspension kommt es unmittelbar zu einer Mischfällung von Hydroxiden der beiden Dotierstoff in Form von Al(OH)₃ und Yb(OH)₃. Die so gebildeten Feststoffteilchen adsorbieren an den vorhandenen Oberflächen der SiO2-Teilchen und werden dadurch immobilisiert, so dass eine Koagulation der Feststoffteilchen oder eine Sedimentation verhindert wird. Auf diese Weise wird in dem Schlicker eine Dotierstoffkonzentration von 2 mol-% Al und 0,5 mol-% Yb (bezogen auf den Si-Gehalt der Suspension) eingestellt. Anschließend wird der mit den Dotierstoffen versetzte Schlicker weitere 2 Stunden lang durch Rühren homogenisiert. Mit dieser Vorgehensweise ist gewährleistet, dass ein optimal homogen dotierter SiO₂-Schlicker erhalten wird.

Der dotierte SiO₂-Schlicker wird eingefroren und durch sogenannte Frostgranulation zu einem Granulat weiterverarbeitet. Dabei wird der nach dem Auftauen erhaltene Granulatschlamm mehrmals mit Reinstwasser gewaschen und das überschüssige Wasser jeweils abdekantiert.

Anschließend wird der von Ammoniak befreite und gereinigte Granulatschlamm bei einer Temperatur um 400 °C 6 Stunden lang getrocknet. Das getrocknete Granulat wird in eine Kunststoffform eingeschweißt und bei 400 bar isostatisch gepresst.

Der so erhaltene Granulat-Pressling wird unter Heliumspülung erhitzt und danach etwa 8 Stunden lang in chlorhaltiger Atmosphäre bei etwa 900 °C behandelt. Dadurch werden Verunreinigungen aus dem Pressling entfernt und der Hydroxylgruppengehalt wird auf etwa 3 Gew.-ppm reduziert. Der Chlorgehalt kann durch eine Nachbehandlung unter sauerstoffhaltiger Atmosphäre bei hoher Temperatur gesenkt werden. Niedrige Konzentrationen an Hydroxylgruppen und Chlor erleichtern das blasenfreie Sintern

Der gereinigte Granulatpressling hat Zylinderform mit einem Durchmesser von 30 mm und einer Länge von 100 mm. Seine mittlere Dichte beträgt etwa 45% der Dichte des dotierten Quarzglases. Er ist ein Zwischenprodukt und wird in einem Gasdrucksinterprozesses zu einem Bauteil aus dem dotierten, transparenten Quarzglas erschmolzen.

Der Gasdrucksinterprozess wird in einem Gasdrucksinterofen mit einer evakuierbaren Sinterform aus Grafit durchgeführt. Der Innenraum der Sinterform ist zylinderförmig ausgebildet und von einem Boden und einer im Querschnitt ringförmigen Seitenwand begrenzt.

Die teilverdichteten Sinterkörper werden in einer Grafitform bei einer Temperatur von 1700 °C durch Gasdrucksintern verglast. Hierbei wird die Form zunächst unter Aufrechterhaltung eines Unterdrucks von auf die Sintertemperatur von 1700 °C aufgeheizt. Nach Erreichen der Sintertemperatur wird im Ofen ein Überdruck von 15 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrecht erhalten. Nach dem Abkühlen auf Raumtemperatur wird der Quarzglasblock entnommen und es wurden Stäbe mit einer Länge von 20 cm und einem Durchmesser von 15 mm ausgebohrt.

### Thermo-mechanische Homogenisierung mittels oxidierend wirkendem Plasma

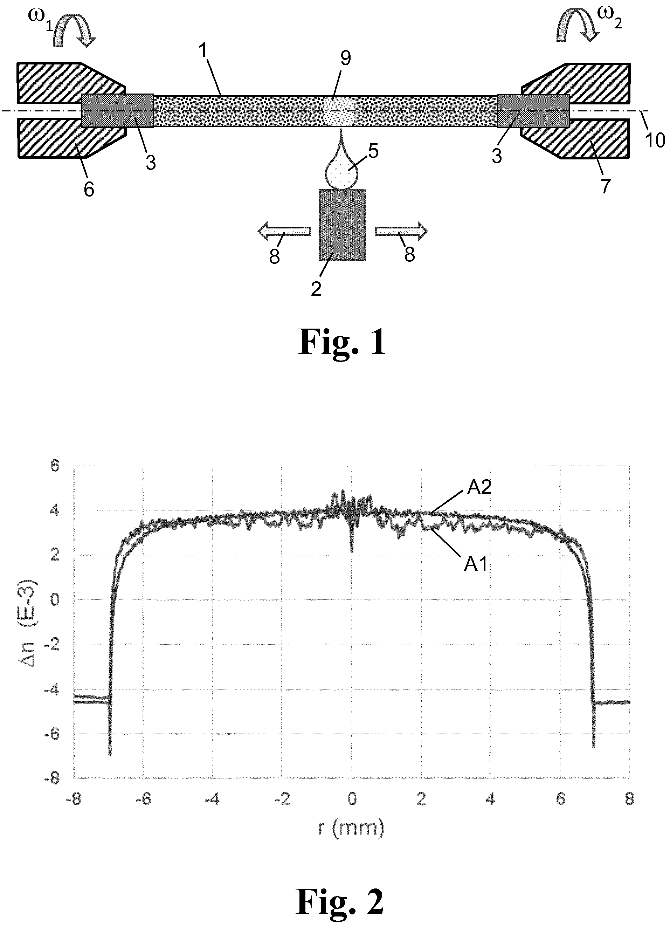

Das stabförmige Halbzeug wird anschließend durch thermisch mechanische Homogenisierung (Verdrillen) und Bildung eines Zylinders aus Seltenerdmetall-dotiertem Quarzglas homogenisiert. Dieser Bearbeitungsvorgang ist in **Figur 1** schematisch gezeigt. Hierzu werden an die stirnseitigen Enden des stabförmigen Halbzeugs 1 zwei Haltestäbe 3 aus undotiertem Quarzglas mittels Plasmabrenner angeschweißt. Die Haltestäbe 3 werden in den Spindeln 6, 7 einer Glasdrehbank eingespannt. Die Glasdrehbank ist mit einem Plasmabrenner 2 ausgestattet, dem als Plasmagas reiner Sauerstoff zugeführt wird. Der Plasmabrenner 2 erzeugt eine Plasmaflamme 5, die unter Atmosphärendruck zündet und die gegenüber Silizium und den Seltenerdmetallen oxidierend wirkt. Das Plasma wird durch Mikrowellenanregung mit einer Frequenz von 2,45 GHz bei einer Leistung von 6000 Watt angeregt.

Die Plasmaflamme 5 wird entlang des in der Glasdrehbank eingespannten und Halbzeugs 1 geführt und dieses dabei lokal auf über 2.000 °C erhitzt. Durch ungleiche Rotationsgeschwindigkeiten (ω1, ω2) der beiden Glasdrehbank-Spindeln 6, 7 entsteht ein Tordierungsbereich 9, welcher sich im Heizbereich der Plasmaflamme 5 befindet. In diesem Tordierungsbereich 9 findet eine Durchmischung und somit eine Homogenisierung des Glases statt. Der Plasmabrenner 2 wird entlang des Halbzeugs 1 mit niedriger Geschwindigkeit reversierend bewegt (wie von den Richtungspfeilen 8 angedeutet) und dabei das stabförmige Halbzeug 1 zonenweise um seine Längsachse 10 verdrillt und dadurch die erweichte Glasmasse über die gesamte Länge des Halbzeugs intensiv durchmischt. Auf diese Weise wird ein Glas-Zylinder mit einem Durchmesser von etwa 15 mm und einer Länge von etwa 100 mm erhalten.

Durch das oxidierend wirkende Mikrowellen-Sauerstoff-Atmosphärendruckplasma 5 wird der Anteil an Chlor und reduzierter Spezies im Seltenerdmetall-dotierten Quarzglas vermindert. Dies zeigt sich durch eine Entfärbung des Glases.

Die Stäbe aus homogenisiertem Quarzglas wurden als Kernstäbe zur Herstellung einer Vorform für eine Laserfaser eingesetzt. Hierzu wurde mittels eines Plasmabeschichtungsprozesses auf den vorab durch Ätzen in HF-Lösung gereinigten Kernstäben ein Fluor-dotiertes Quarzglas als Mantelglas aufgebaut und so eine Laserfaser-Vorform hergestellt. Diese Vorform wurde anschließend im Faserziehturm zu einer Laserfaser weiterverarbeitet. Die so erhaltene Laserfaser zeigte Laseraktivität.

Zur Ermittlung der Brechungsindex-Fluktuation werden aus dem homogenisierten Glas-Zylinder scheibenförmige Messproben mit einer Dicke von 10 mm geschnitten.

**Figur 2** zeigt das typische Brechzahlprofil einer Yb-Al-F-dotierten Quarzglasprobe vor (A1) und nach der Homogenisierung (A2). Auf der y-Achse ist der Brechungsindexunterschied Δn (x 10⁻³) (als Differenzwert gegenüber undotiertem Quarzglas) gegen den Radius r (in mm; normiert auf gleichen Radius) aufgetragen. Vor der Homogenisierung (Brechzahlprofil A1) zeigen sich deutliche Brechungsindex-Fluktuationen. Es ist erkennbar, dass nach der Homogenisierung (Brechzahlprofil A2) die Brechzahlschwankungen deutlich reduziert sind. Die Auswertung des Brechzahlprofils (Δn) über die Messlänge von 1/3 x r bis 1/2 x r (gemessen vom Punkt 0 in der Probenmitte nach außen) ergab einen maximalen BrechungsindexUnterschied von 0,43 x 10⁻³, der gleichzeitig der Brechungsindex-Fluktuation δΔn entspricht. Die auf Δn normierte Verhältniszahl δΔn/Δn liegt hier bei 7%. Im Vergleich dazu beträgt die Verhältniszahl δΔn/Δn vor der Homogenisierung 20%. Dies äußert sich auch visuell durch eine bessere Transparenz und reduzierte Streuung der homogenisierten Probe.

Die jeweils im Randbereich der Proben beobachteten Verrundungen der Brechzahlprofile sind auf Artefakte des Algorithmus zurückzuführen, mit dem das Profil berechnet wird. Diese Verrundungen sind nicht real. Die zunehmende Brechungsindexfluktuation im zentralen Bereich ist ebenfalls auf ein Artefakt zurückzuführen. In Bereichen, in denen diese Artefakte weniger dominant sind, wird anhand der Profilmessung in homogenisierten Stäben kurzreichweitig (hier gemessen von radialer Position -3 mm bis -2 mm) sogar eine Fluktuation des Brechungsindexes, δΔn, von 0,3 x 10⁻³ (Standardabweichung 0,1 x 10⁻³) erreicht.

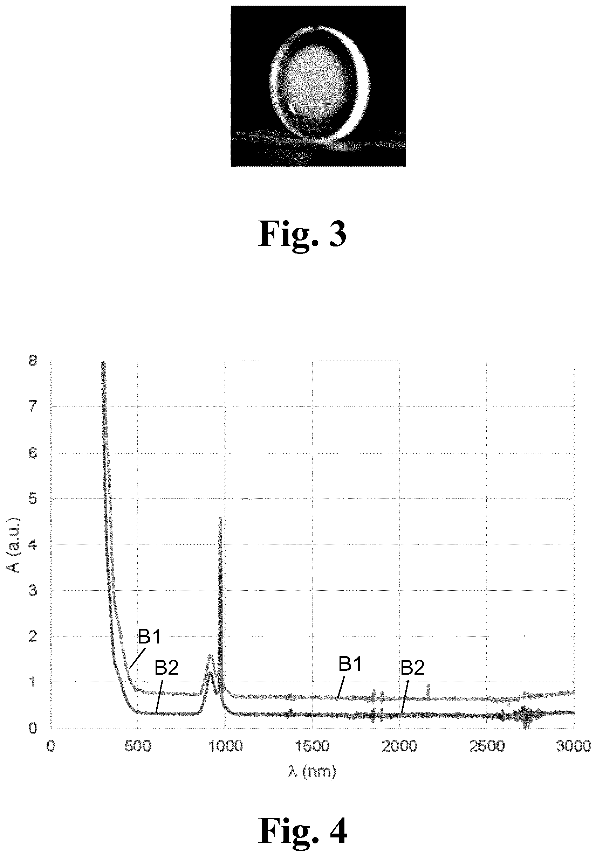

Das Foto der Messprobe von **Figur 3** zeigt, dass der Randbereich der Probe infolge der höheren Scherung außen bereits stärker homogenisiert ist als das Probenzentrum, das vergleichsweise inhomogener ist und eine erhöhte Gelbfärbung aufweist. Die Plasma-Homogenisierung wurde in diesem Fall abgebrochen, bevor die oxidierende Wirkung des Plasmas, die von zeitlich abhängigen Diffusionsprozessen mitbestimmt wird, auch den zentralen Bereich des Torsionsbereichs erreicht hat.

Das Diagramm von **Figur 4** zeigt den spektralen Absorptionsverlauf im Wellenlängenbereich von 250 bis 3500 nm, gemessen an einer nur teilweise homogenisierten Yb-Al-dotierten Quarzglasprobe. Auf der y-Achse ist die Absorption A (in normierter Einheit) aufgetragen. Der Absorptionsverlauf B1 ist dem noch nicht homogenisierten Zentrum der Messprobe zugeordnet und der Absorptionsverlauf B2 dem homogenisierten Randbereich. Durch die signifikante Reduzierung der Streuzentren und durch die Verbesserung der Materialhomogenität im Randbereich sinkt die Grunddämpfung (Streuanteil) im zugehörigen Absorptionsspektrum B2 des homogenisierten Probenbereichs, wobei sich die Ytterbium-Konzentration zwischen den einzelnen Proben-Bereichen nicht signifikant ändert, wenn man den Streuanteil in den Spektren abzieht. Durch die Plasma-Homogenisierung wird somit das Yb³⁺/Yb²⁺-Gleichgewicht zugunsten von Yb³⁺ verschoben. Die Absorption aufgrund der nicht zum Lasereffekt beitragenden zweiwertigen Yb²⁺-Ionen wird eliminiert, was daran erkennbar ist, dass die Gelbfärbung der Probe im homogenisierten Randbereich verschwindet, und dass der Absorptionsverlauf B2 des homogenisierten Probenbereichs im blauen Spektralbereich sinkt, wodurch sich die Transmission verbessert.

Durch die Plasma-Homogenisierung lässt sich somit das Yb³⁺/Yb²⁺-Gleichgewicht zugunsten von Yb³⁺ verschieben, und sie wirkt insoweit wie eine Nachbehandlung des Glases durch Erhitzen in Sauerstoff-Atmosphäre, allerdings wesentlich effektiver, indem der oxidierend wirkenden Atmosphäre beim Verdrillen laufend neu geschaffene Oberfläche ausgesetzt wird. Die erfindungsgemäße Plasma-Homogenisierung erfüllt eine Homogenisierung des Seltenerdmetall-dotierten Quarzglases auf unterschiedlichen Ebenen, nämlich einerseits eine mechanische Durchmischung, die zu einer Beseitigung von Unterschieden in der Zusammensetzung und einer Vereinheitlichung des Brechungsindex des Glases führt und andererseits eine chemische Behandlung, die eine Veränderung und Vereinheitlichung der elektrischen Eigenschaften des Glases und ebenfalls des von der Elektronenkonfiguration beeinflussbaren Anteils des Brechungsindex bewirkt.

Die erwähnte Gelbfärbung des Glases vor der Plasma-Homogenisierung ist darauf zurückzuführen, dass Yb²⁺ im Vergleich zu Yb³⁺ zusätzliche Absorptionsbanden im blauen Spektralbereich besitzt. Rein visuell lässt sich die Verschiebung des Yb³⁺/Yb²⁺-Gleichgewichts nach der Plasma-Homogenisierung dadurch beobachten, dass die Gelbfärbung im Glas geringer wird.

Die Messproben zeigten nur wenige erkennbare Blasen. Das Ergebnis einer visuellen Auswertung mehrerer typischer Messproben in Form von Kernstäben und Vorformen ist in Tabelle 1 zusammengefasst:

**Tabelle 1**

| | **Abmessungen [mm]** | **Blasen-Anzahl** | **Mittlerer Blasendurchmesser [µm]** | **TBCS-Wert** |
|---|---|---|---|---|
| | L = Länge | | | |
| | Φ= Durchmesser | | | |
| Vorform | L=845 | 8 | 100 | 8 |
| | Φ=1,1 | | | |
| Kernstab | L=1500 | 25 | 300 | 6 |
| | Φ=15 | | | |
| Kernstab | L=1500 | 20 | 200 | 3 |
| | Φ=15 | | | |

Bei allen diesen Messproben ist die Blasigkeit geringer als sie durch einen TBCS-Wert von 10 repräsentiert wird.

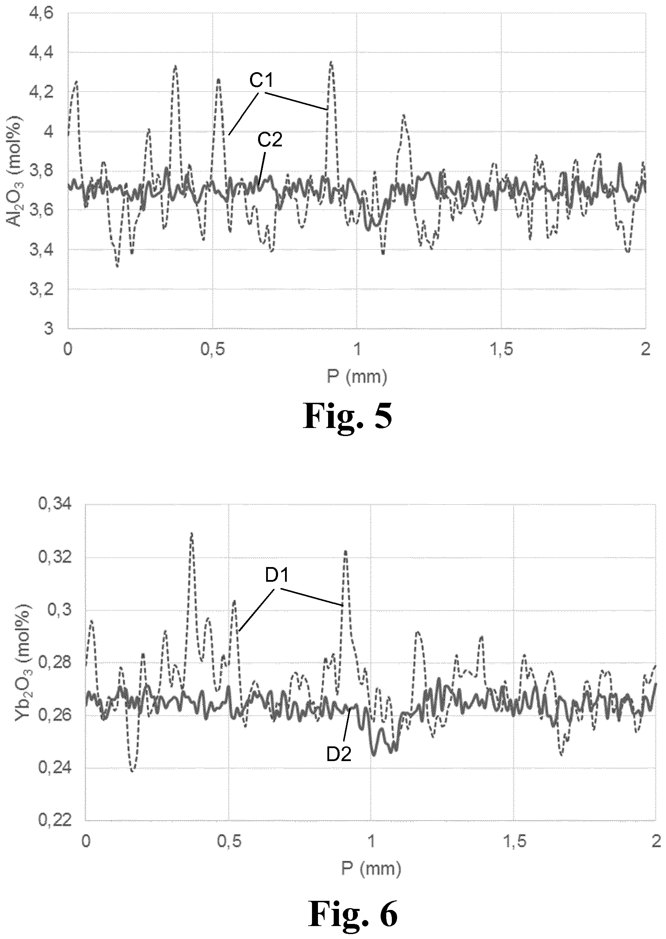

Der durch die Reinigung des Granulat-Presslings voreingestellte Hydroxylgruppengehalt nimmt aufgrund der nachfolgenden Behandlungen nicht zu. Wie aus den Figuren 5 bis 8 ersichtlich, ist die Homogenisierung hinsichtlich der chemischen Zusammensetzung jedoch markant. Diese Diagramme zeigen jeweils das Verteilungsprofil spezifischer Komponenten des Seltenerdmetall-dotierten Quarzglases vor und nach der Plasma-Homogenisierung. Die Verteilungsprofile beruhen auf Elektronenstrahlmikroanalyse (ESMA, basierend auf wellenlängendispersiver Röntgenspektroskopie (WDX)). Auf der y-Achse ist die jeweilige Dotierstoff-Konzentration (in mol-% beziehungsweise in ppmw) über der Messposition P (in mm) aufgetragen. Die Messlänge beträgt 2 mm.

Das Diagramm von **Figur 5** zeigt die radialen Konzentrationsverteilungsprofile des Dotierstoffs Al₂O₃ vor (Kurve C1) und nach (Kurve C2) der Plasma-Homogenisierung, und das Diagramm von **Figur 6** die radialen Verteilungsprofile des Dotierstoffs Yb₂O₃ vor (Kurve D1) und nach (Kurve D2) der Plasma-Homogenisierung, In beiden Fällen ist die Profilglättung nach der Plasma-Homogenisierung (Kurven C2, D2) markant.

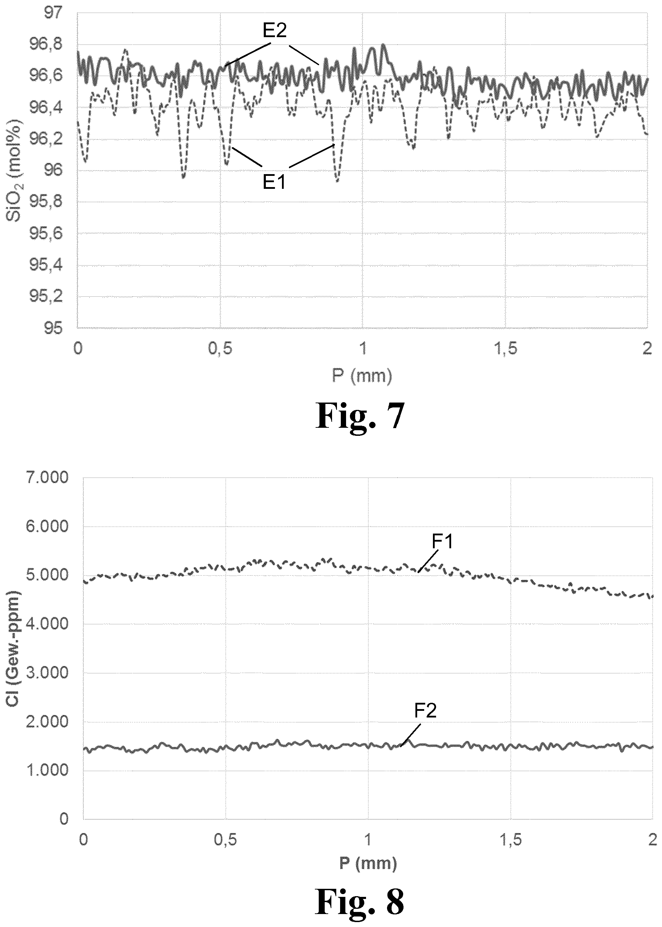

Auch das Diagramm von **Figur 7** zeigt, dass eine deutliche Glättung des radialen Konzentrationsverteilungsprofils für die Hauptkomponente des Werkstoffs -SiO₂ - nach der Plasma-Homogenisierung (Kurve E2) gegenüber dem Profil vor der Plasma-Homogenisierung (Kurve E1).

Aus dem Diagramm von **Figur 8****,** das die radialen Verteilungsprofile von Chlor vor (Kurve F1) und nach (Kurve F2) der Plasma-Homogenisierung zeigt, ist ersichtlich, dass die Chlorkonzentration zum einen durch die Plasma-Homogenisierung auf etwa ¼ des anfänglichen Wertes deutlich reduziert wird, und dass sich zum anderen eine homogenere Verteilung der Chlorkonzentration einstellt.

Diese Wirkung der Plasma-Homogenisierung ist vor allem deswegen wünschenswert, weil der Mittelwert der Chlorkonzentration auf einen Wert von etwa 1500 Gew.-ppm eingestellt wird, der sich als geeigneter Kompromiss in Bezug auf Brechungsindex und UV-Strahlenbeständigkeit des Glases erweist und weil andererseits unnötige Konzentrationsmaxima für Chlor vermieden werden, wie sie die Kurve F1 in der Probenmitte zeigt. Die in der Figur angegebenen Chlor-Konzentrationswerte beziehen sind auf reines Quarzglas; Dotierstoffe sind nicht berücksichtigt.

## Patentansprüche

1. Verfahren zur Herstellung von Seltenerdmetall-dotiertem Quarzglas, umfassend die Verfahrensschritte:
(a) Bereitstellen eines Rohlings(1) aus dem mit Seltenerdmetall dotierten Quarzglas, und
(b) Homogenisieren des Rohlings (1), indem dieser in einer Heizzone (2) zonenweise erweicht und dabei die erweichte Zone (9) längs einer Rotationsachse (10) tordiert wird,
**dadurch gekennzeichnet, dass** der Rohling (1) beim Homogenisieren gemäß Verfahrensschritt (b) unter Einwirkung eines oxidierend wirkenden oder neutralen Plasmas (5) erweicht wird.

2. Verfahren nach Anspruch 1, **dadurch gekennzeichnet, dass** dem Plasma (5) ein sauerstoffhaltiges Gas zugeführt wird.

3. Verfahren nach einem der Ansprüche 1 oder 2, **dadurch gekennzeichnet, dass** ein Mikrowellen-Atmosphärendruckplasma oder ein induktiv gekoppeltes Plasma erzeugt wird.

4. Verfahren nach einem der vorhergehenden Ansprüche, **dadurch gekennzeichnet, dass** dem Plasma (5) ein Plasmagas zugeführt wird, das frei von Wasserstoff und wasserstoffhaltigen Verbindungen ist.

5. Verfahren nach einem der vorhergehenden Ansprüche, **dadurch gekennzeichnet, dass** das Homogenisieren des Rohlings (1) zwei Homogenisierungsschritte umfasst, in denen der Rohling (1) in zwei senkrecht aufeinander stehenden Richtungen tordiert wird.

6. Seltenerdmetall-dotiertes Quarzglas, das Seltenerdmetalloxid in einer Konzentration von 0,002 bis 10 mol-% enthält, **dadurch gekennzeichnet, dass** es eine Fluktuation im Brechungsindex δΔn aufweist, die - bei einer zylinderförmigen Messprobe mit Radius r über eine Messlänge von 1/3 x r bis 1/2 x r und gemessen von r=0 nach außen - bezogen auf eine mittlere Brechungsindexdifferenz Δn bezüglich undotiertem Quarzglas - weniger als 10 % beträgt, und dass es eine durch einen TBCS-Wert von weniger als 10 repräsentierte Blasigkeit aufweist und
dass das Quarzglas einen mittleren Chlorgehalt im Bereich von 300 bis 3000 Gew.-ppm aufweist, wobei der TBCS-Wert die Summe der Querschnittsflächen in mm² aller Blasen bezogen auf ein Einheitsvolumen von 100 cm³ bezeichnet.

7. Seltenerdmetall-dotiertes Quarzglas nach Anspruch 6, **dadurch gekennzeichnet, dass** das Quarzglas einen mittleren Hydroxylgruppengehalt zwischen 0,1 und 100 Gew.-ppm.

## Claims

1. Method for producing rare earth metal-doped quartz glass, comprising the method steps:
(a) providing a blank (1) of the rare earth metal-doped quartz glass, and
(b) homogenizing the blank (1) by softening the blank zone by zone in a heating zone (2) and by twisting the softened zone (9) along a rotation axis (10),
**characterized in that** during homogenization according to method step (b) the blank (1) is softened under the action of an oxidizingly acting or neutral plasma (5).

2. Method according to claim 1, **characterized in that** an oxygen-containing gas is supplied to the plasma (5).

3. Method according to any one of claims 1 or 2, **characterized in that** a microwave atmospheric pressure plasma or an inductively coupled plasma is generated.

4. Method according to any one of the preceding claims, **characterized in that** a plasma gas which is free of hydrogen or hydrogenous compounds is supplied to the plasma (5).

5. Method according to any one of the preceding claims, **characterized in that** the homogenization of the blank (1) includes two homogenization steps in which the blank (1) is twisted in two directions that are perpendicular to each other.

6. Rare earth metal-doped quartz glass which contains rare-earth metal oxide in a concentration of 0.002 to 10 mole%, **characterized in that** it has a fluctuation in the refractive index δΔn which- in the case of a cylindrical test piece with a radius r over a measuring length of 1/3 x r to 1/2 x r and measured from r=0 outwards - based on a mean refractive index difference Δn with respect to undoped quartz glass, is less than 10%, and that it has a bubble content represented by a TBCS value of less than 10, and wherein the quartz glass has a mean chlorine content in the range of 300 to 3000 wt. ppm.

7. Rare earth metal-doped quartz glass according to claim 6, **characterized in that** the quartz glass has a mean hydroxyl group content between 0.1 and 100 wt. ppm.

## Revendications

1. Procédé servant à fabriquer un verre de quartz dopé avec un métal des terres rares, comprenant les étapes de procédé de :
(a) fourniture d'une ébauche (1) composée du verre de quartz dopé avec le métal des terres rares, et
(b) d'homogénéisation de l'ébauche (1) en ce que celle-ci ramollit par zone dans une zone de chauffage (2) et dans ce cadre, la zone ramollie (9) est tordue le long d'un axe de rotation (10),
**caractérisé en ce que** l'ébauche (1) est ramollie lors de l'homogénéisation selon l'étape de procédé (b) sous l'effet d'un plasma (5) à action oxydante ou neutre.

2. Procédé selon la revendication 1, **caractérisé en ce qu'**un gaz contenant de l'oxygène est amené au plasma (5).

3. Procédé selon l'une quelconque des revendications 1 ou 2, **caractérisé en ce qu'**un plasma à pression atmosphérique à micro-ondes ou un plasma couplé de manière inductive est généré.

4. Procédé selon l'une quelconque des revendications précédentes, **caractérisé en ce qu'**un gaz plasmatique est amené au plasma (5), qui est sans hydrogène et composés contenant de l'hydrogène.

5. Procédé selon l'une quelconque des revendications précédentes, **caractérisé en ce que** l'homogénéisation de l'ébauche (1) comprend deux étapes d'homogénéisation, dans lesquelles l'ébauche (1) est tordue dans deux directions situées de manière perpendiculaire l'une par rapport à l'autre.

6. Verre de quartz dopé avec un métal des terres rares, qui contient de l'oxyde de métal des terres rares en une concentration allant de 0,002 à 10 % en mol., **caractérisé en ce qu'**il présente une fluctuation dans l'indice de réfraction δΔn, qui est inférieure à 10 % par rapport à une différence d'indice de réfraction moyenne Δn concernant un verre de quartz non dopé - dans le cas d'un échantillon de mesure de forme cylindrique avec un rayon r sur une longueur de mesure de 1/3 x r à 1/2 x r et selon une mesure de r = 0 vers l'extérieur, et qu'il présente un gondolage représenté par une valeur TBCS inférieure à 10, et que le verre de quartz présente une teneur en chlore moyenne dans la plage allant de 300 à 3000 ppm en poids, dans lequel la valeur TBCS désigne la somme des surfaces de section transversale en mm² de toutes les bulles par rapport à une unité de volume de 100 cm³.

7. Verre de quartz dopé avec un métal des terres rares selon la revendication 6, **caractérisé en ce que** le verre de quartz présente une teneur en groupes hydroxyle moyenne entre 0,1 et 100 ppm en poids.
